# EUROPÄISCHE PATENTSCHRIFT

(11) **EP 1 581 409 B1**
(45) Veröffentlichungstag und Bekanntmachung des Hinweises auf die Patenterteilung: **07.07.2010**
(21) Anmeldenummer: 04701350.3
(22) Anmeldetag: 12.01.2004
(51) Int. Cl.: B60N 2/48

(54) **BEFESTIGUNGSVORRICHTUNG FÜR DIE KOPFSTÜTZE EINES FAHRZEUGSITZES**
FASTENING DEVICE FOR THE HEADREST OF A VEHICLE SEAT
DISPOSITIF DE FIXATION POUR APPUI-TETE DE SIEGE DE VEHICULE

(30) Priorität: 10.01.2003 DE 10300832
(43) Veröffentlichungstag der Anmeldung: 05.10.2005
(73) Patentinhaber: Alfmeier Präzision AG Baugruppen und Systemlösungen, 91757 Treuchtlingen (DE)
(72) Erfinder: EBBESKOTTE, Ulrich, 75382 Neuhengstett (DE); KRAFT, Dieter, 91799 Langenaltheim (DE)
(74) Vertreter: Mörtel & Höfner
(86) Internationale Anmeldenummer: PCT/EP2004/000129
(87) Internationale Veröffentlichungsnummer: WO 2004/062963

(56) Entgegenhaltungen:
- EP-A- 0 829 390
- US-A- 4 639 041
- US-A- 4 678 232
- US-A- 5 397 170
- PATENT ABSTRACTS OF JAPAN Bd. 0062, Nr. 46 (M-176), 4. Dezember 1982 (1982-12-04) & JP 57 144135 A (TOYO KOGYO KK; others: 01), 6. September 1982 (1982-09-06)

## Beschreibung

Die Erfindung betrifft eine Befestigungsvorrichtung für die Kopfstütze eines Fahrzeugsitzes, welche zwei in Sitzquerrichtung beabstandete Halterungen zur höhenverstellbaren Führung zweier die Kopfstütze tragenden Tragstangen aufweist. Die Halterungen sind so gestaltet, dass sie die Tragstangen, die in der Regel von den Schenkeln eines Kopfstützenbügels gebildet sind, vor allen Dingen in Sitzlängsrichtung (X-Richtung) aber auch in Sitzquerrichtung (Y-Richtung) sicher und spielarm fixieren. Um eine Höhenverstellung zu gewährleisten, weisen die Halterungen meist hülsenförmige Aufnahmen für die Tragstangen auf. Um eine Verrastung der Kopfstütze in verschiedenen Höhenlagen zu gewährleisten, ist eine der beiden Tragstangen mit Einkerbungen versehen, in die ein federnd beaufschlagtes Rastelement eingreift.

Derartige Befestigungsvorrichtungen sind z.B. aus der US 4 639 041 A oder der EP 0 829 390 A bekannt.

Sowohl bei manueller als auch bei Motor-, Federkraft- oder Schwerkraft unterstützter Höhenverstellung ist es wünschenswert, dass die Tragstangen der Kopfstützen in ihren Halterungen ohne hohen Kraftaufwand in Sitzhöhenrichtung (Z-Richtung) verstellbar sind. Dies setzt eine exakt parallele Ausrichtung sowohl der Tragstangen als auch der sie aufnehmenden hülsenförmigen Führungsteile in der YZ- und der YZ-Ebene und einen aufeinander abgestimmten Abstand von Tragstangen und Führungsteilen voraus. Aus Fertigungstechnischen Gründen lässt es sich nicht ganz vermeiden, dass die Tragstangen und auch die Führungsteile vom Idealzustand abweichen mit der Folge, dass die zum Verstellen der Kopfstütze erforderliche Kraft erhöht ist, was die manuelle Betätigung erschwert und zu Störungen bei einer automatischen Betätigung führen kann.

Davon ausgehend ist es die Aufgabe der Erfindung eine Befestigungsvorrichtung für eine Kopfstütze vorzuschlagen, die auch in den oben genannten Fällen eine leichtgängige Höhenverstellung erlaubt.

Diese Aufgabe wird durch eine Befestigungsvorrichtung nach Anspruch 1 gelöst. Danach ist eine Halterung mit einer eine Tragstange im Sinne einer Gleitführung aufnehmende Führungshülse vorgesehen, wobei diese an einem am Sitzgestell in Y-Richtung beweglich geführten Träger um eine in X-Richtung verlaufende erste Achse schwenkbar gelagert ist. Bei Halterungen mit fest am Sitzgestell fixierten Führungsteilen würde schon allein eine Abweichung des Abstandes der sonst exakt in der XZ- und YZ- Ebene parallel ausgerichteten Tragstangen eine Schwergängigkeit der Höhenverstellung bewirken. Durch die Beweglichkeit der Führungshülse in Y-Richtung kann diese ihre Y-Position dem jeweiligen Spurmaß der Tragstangen anpassen. Dadurch sind Verspannungen und eine daraus resultierende Erhöhung der Verstellkräfte vermieden.

Vorzugsweise ist die Führungshülse aber auch um eine in Sitzlängsrichtung, d.h. in X-Richtung schwenkbare Achse am Träger gelagert. Im Falle einer Verschränkung der Tragstangen in der XZ-Ebene kann die Führungshülse am Träger eine der Schrägstellung der Tragstange entsprechende Neigung einnehmen. Eine Beweglichkeit des Trägers in X-Richtung ist in diesem Falle nicht erforderlich. Eine etwa vorhandene Bewegungskomponente in X-Richtung würde allenfalls zu einer leichten Schwenkbewegung mit der zweiten Kopfstützenstange als Schwenkachse und damit zu einer äußerst geringfügigen und daher tolerierbaren Schrägstellung der Kopfstütze in bezug auf die Y-Richtung führen. Eine Verschränkung der Tragstangen in der XZ-Ebene kann aber auch ausgeglichen werden, wenn eine Bewegungsmöglichkeit in Y-Richtung in der zweiten Halterung vorgesehen ist, wenn z.B. eine dort vorhandene um eine in Y-Richtung verlaufende Achse schwenkbar gelagert ist. Allgemein gesprochen kann also die Ausgleichsmöglichkeit in der YZ-Ebene und in der XZ-Ebene auf die zwei Halterungen einer Befestigungsvorrichtung verteilt werden.

Die Beweglichkeit des Trägers in Y-Richtung könnte zum Beispiel dadurch bewerkstelligt werden, dass dieser auf einer sich in Y-Richtung erstreckenden, am Sitzgestell angeordneten Kulisse verschiebbar geführt ist. Bei der Höhenverstellung einer Kopfstütze mit in der YZ-Ebene schräg zueinander stehenden Tragstangen würde aber diese Kulissenführung mit einer in Längsrichtung der Tragstangen wirkenden Kraft beaufschlagt, was die Reibung zwischen Führungshülse und Kulisse und damit die Verschiebekraft in Y-Richtung, letztlich also die Verstellkraft in Z-Richtung erhöhen würde. Bei einer weiteren bevorzugten Ausführungsvariante ist daher vorgesehen, dass der Träger am Sitzgestell um eine dritte Achse schwenkbar gelagert ist, die mit Abstand in Z-Richtung zur ersten Achse, vorzugsweise unterhalb dieser angeordnet ist und parallel zu dieser, also in X-Richtung verläuft. Durch diese Ausgestaltung sind im Falle einer Spurmaß- und/oder Parallelitäts-Abweichung der Tragstangen die für eine Y-Verschiebung des Trägers erforderlichen Reibungskräfte wesentlich geringer als bei einer Verschiebung auf die oben beschriebene Art, was eine leichtere Verstellbarkeit der Kopfstütze in Z-Richtung zur Folge hat.

Ein kippsicheres Verschwenken des Trägers wird bei einer bevorzugten Ausführungsvariante dadurch gewährleistet, dass ein sich oberhalb der dritten Achse befindlicher Bereich des Trägers in Y-Richtung beweglich geführt ist. Um jedoch eine wackelfreie und sichere Halterung der Kopfstütze in X-Richtung zu gewährleisten ist der Träger in dieser Richtung am Sitzgestell fixiert. Die dritte Schwenkachse, um welche der Träger am Sitzgestell schwenkbar gelagert ist, wird bei einer bevorzugten Ausgestaltung von zwei am Sitzgestell vorhandenen, sich in X-Richtung gegenüberliegenden Vorsprüngen gebildet, auf denen sich der Träger abstützt.

Bei einer besonders bevorzugten Ausführungsform ist die Führungshülse mit einem von ihrer Außenseite vorstehenden Ringvorsprung versehen, der in eine komplementär ausgebildete Ausnehmung am Träger gelenkartig eingreift. Dabei bilden die Oberfläche des Ringsvorsprungs und die mit ihr zusammenwirkende Gegenfläche der Ausnehmung Teile von Kugelflächen, deren Mittelpunkt der Schnittpunkt der ersten und der zweiten Achse sind. Führungshülse und Träger sind somit nach Art eines Kugelgelenks miteinander verbunden. Die Führungshülse kann daher am Träger sowohl um die erste als auch in die zweite Achse verschwenkt werden. Eine weiterer Vorteil der genannten Gelenkverbindung besteht darin, dass die Führungshülse voll umfänglich vom Träger umfasst ist. Dadurch ist eine spielfreie und zuverlässige Halterung der Führungshülse am Träger gewährleistet, die aber gleichwohl ein leichtes Verschwenken der Führungshülse und eine großflächige Krafteinleitung im Crash-Fall ermöglicht.

Bei einer weiteren bevorzugten Ausführungsform ist die Festigkeit der Verbindung zwischen Führungshülse und Träger noch dadurch verbessert, dass sich die Führungshülse an einem von ihrer Außenseite vorstehenden Flansch an einer Gegenfläche am oberen Ende des Trägers abstützt. Dadurch wird die genannte Gelenkverbindung beim Einstecken einer Kopfstützenstange entlastet. Dadurch ist gewährleistet, dass selbst wenn beispielsweise aufgrund einer extremen Schrägstellung einer Stange hohe Kräfte in Stangenlängsrichtung auf die Führungshülse wirken, dennoch diese leichtgängig gegenüber dem Träger verschwenkbar ist. Der Flansch dient außerdem als Anschlag, der die Einstecktiefe der Führungshülse bei der Montage auf eine Axialposition begrenzt, bei der sich der Vorsprung auf gleicher Höhe wie die mit ihm zusammenwirkende Ausnehmung befindet. Ein leichtgängiges Zusammenwirken der genannten Flächen sowie eine ausreichende Abstützfunktion in jeder Schwenkposition der Führungshülse ist dadurch gewährleistet, dass die zusammenwirkenden Flächen des Flansches und des Trägers Teile von Kugelflächen sind, deren Mittelpunkt der Schnittpunkt der ersten und der zweiten Achse ist.

Vorzugsweise ist der Träger ein von der Führungshülse durchgriffenes Hohlprofil. Vorteilhaft ist dies insbesondere, wenn das Sitzgestell eine Lagerhülse umfasst, in der das Hohlprofil mit Spiel in Y-Richtung einliegt. Dadurch, dass der Träger von der Lagerhülse eingekapselt ist, ist verhindert, dass Fremdkörper in die Halterung eindringen und die Beweglichkeit der Führungshülse und des Trägers einschränken. Um die Beweglichkeit bzw. Schwenkbarkeit der Führungshülse und des Trägers zu ermöglichen, sind entsprechend bemessene Freiräume zwischen Lagerungshülse und Träger einerseits und zwischen Träger und Führungshülse andererseits erforderlich. Eine bevorzugte Ausführungsvariante sieht nun vor, dass die in Y-Richtung weisenden Wände des Trägers zu dessen unterem Ende hin divergieren. Dadurch wird in Bauraum sparender Weise innerhalb des Trägers ein Schwenkbereich für die Führungshülse geschaffen. Gleichzeitig verringert diese Ausgestaltung die zum Verschwenken des Trägers erforderliche lichte Weite der Lagerungshülse, weil sich der Träger mit zunehmender. Entfernung von seiner Schwenkachse verjüngt, wodurch der in gleicher Richtung zunehmende Schwenkausschlag des Trägers kompensiert wird.

Vorzugsweise ist die Führungshülse (23) in bezug auf ihre Mittellängsachse (40) drehfixiert. Dadurch kann eine an ihrem oberen Ende vorhandene Struktur, beispielsweise eine Abdeckplatte in einer vorgegebenen Drehstellung angeordnet werden. Die Drehfixierung wird durch am Ringvorsprung der Führungshülse an diametral überliegenden Stellen angeformte, radial abstehende Anschläge bewerkstelligt, die in zwei Ausnehmungen am Träger mit Spiel in X-, Y- und Z-Richtung eingreifen. Die Ausnehmungen sind in Form von Schlitzen ausgebildet, die in den in Y-Richtung weisenden Wänden des Trägers vorhanden sind und sich von einem unterhalb der mit dem Vorsprung ein Kugelgelenk bildenden Ausnehmung angeordneten Bereich des Trägers nach oben erstreckt und in der oberen Stirnseite des Trägers mündet. Die Schlitze dienen dabei neben der Drehfixierung auch der Montagevereinfachung, haben also eine Doppelfunktion.

Die Erfindung wird nun anhand eines in den beigefügten Zeichnungen dargestellten Ausführungsbeispiels näher erläutert. Es zeigen:
Fig. 1 den oberen Lehnenbereich eines Fahrzeugsitzes mit Halterungen und einen darin angesteckten Kopfstützenbügel in Schnittdarstellung,
Fig. 2 eine perspektivische, zum Teil aufgebrochene Darstellung einer Halterung,
Fig. 3 bis 8 Abbildungen entsprechend Fig. 1, aus denen die Arbeitsweise einer Kopfstützenhalterung hervorgeht,
Fig. 9 eine schematische Darstellung eines Details einer Halterung.

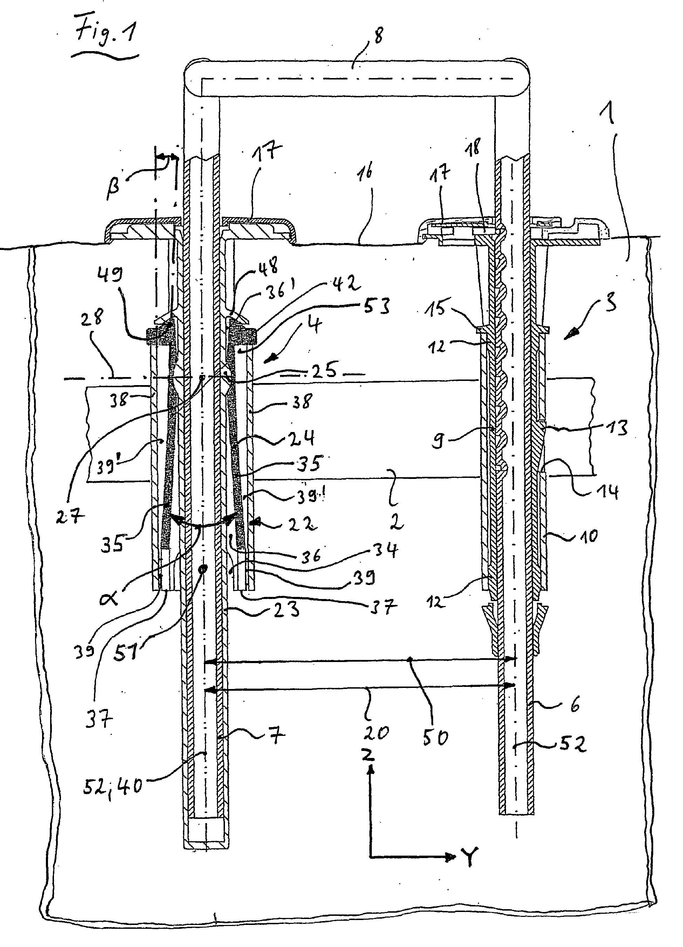

In Fig. 1 ist der obere Lehnenbereich eines Fahrzeugsitzes 1 dargestellt. An einem Sitzgestell 2 sind zwei in Sitzquer- bzw. in Y-Richtung beabstandete Halterungen 3, 4 für eine Kopfstütze fixiert. Aus zeichnerischen Gründen ist in den Abbildungen anstelle der Kopfstütze jeweils nur ihre Tragstruktur, nämlich ein Kopfstützenbügel 5 gezeigt. Dieser umfasst zwei parallele Tragstangen 6, 7, welche in den Halterungen 3, 4 in Sitzhöhen bzw. in Z-Richtung geführt sind. An ihrem oberen Ende sind die Stangen 6, 7 durch ein bügelförmiges Teil 8 miteinander verbunden. Denkbar ist natürlich auch eine Kopfstütze mit zwei nicht miteinander verbundenen Tragstangen.

Die Halterung 3 umfasst eine die Tragstange 6 aufnehmende Führungshülse 9, welche in einer am Sitzgestell 2 fixierten Lagerhülse 10 einliegt. Der Durchmesser zumindest zweier endständiger Längsabschnitte 12 der Führungshülse 9 ist so gewählt, dass diese spielfrei oder zumindest spielarm von der Lagerhülse 10 aufgenommen wird. Die Fixierung der Führungshülse 9 in Axialrichtung erfolgt durch eine Rastnase 13, welche in ein Fenster 14 der Lagerhülse 10 hineinragt. Die Führungshülse 9 stützt sich weiterhin mit einem von ihrer Außenumfangsfläche vorstehenden Flansch 15 auf der oberen Stirnseite der Lagerhülse 10 ab. An ihrem aus der Lehnenoberseite 16 hervorstehenden Ende ist die Führungshülse 9 mit einer Abdeckplatte 17 versehen. Unter der Abdeckplatte ist ein Rastmechanismus angeordnet, der ein federbeaufschlagtes Rastelement 18 umfasst, das zur Höhenverstellung der Kopfstütze bzw. des Kopfstützenbügels 5 in Kerben 19 der Tragstange 6 einrastet.

Die zweite Halterung 4 ist so ausgestaltet, dass sie die Tragstange 7 auch dann verspannungsfrei in sich aufnehmen kann, wenn der Abstand und/oder die Parallelität der Tragstangen 6, 7 von den konstruktiven Vorgaben abweichen. Die Halterung 4 setzt sich im wesentlichen aus einer am Sitzgestell 2 fixierten Lagerhülse 22, einer Führungshülse 23 und einem Träger 24 zusammen. Der Träger 24 ist ein im Querschnitt etwa rechteckiges oder quadratisches Hohlprofil, das in der Lagerhülse 22, die einen eben solchen Querschnitt aufweist, einliegt. Der von dem Träger 24 umschlossene Längsabschnitt der Führungshülse 23 weist einen von seiner Außenumfangsfläche radial vorstehenden Ringvorsprung 25 auf, dessen Oberfläche Teil einer Kugelfläche ist. Der Ringvorsprung 25 ragt formschlüssig in eine komplementär zum Ringvorsprung 25 ausgeformte und nahe dem oberen Ende des Trägers 24 angeordnete Ausnehmung 26 hinein. Ringvorsprung 25 und Ausnehmung 26 bilden ein Kugelgelenk. Dieses ermöglicht es dass die Führungshülse 23 sowohl um eine erste in X-Richtung verlaufende Achse 27 und um eine in Y-Richtung verlaufende zweite Achse 28 schwenkbar ist.

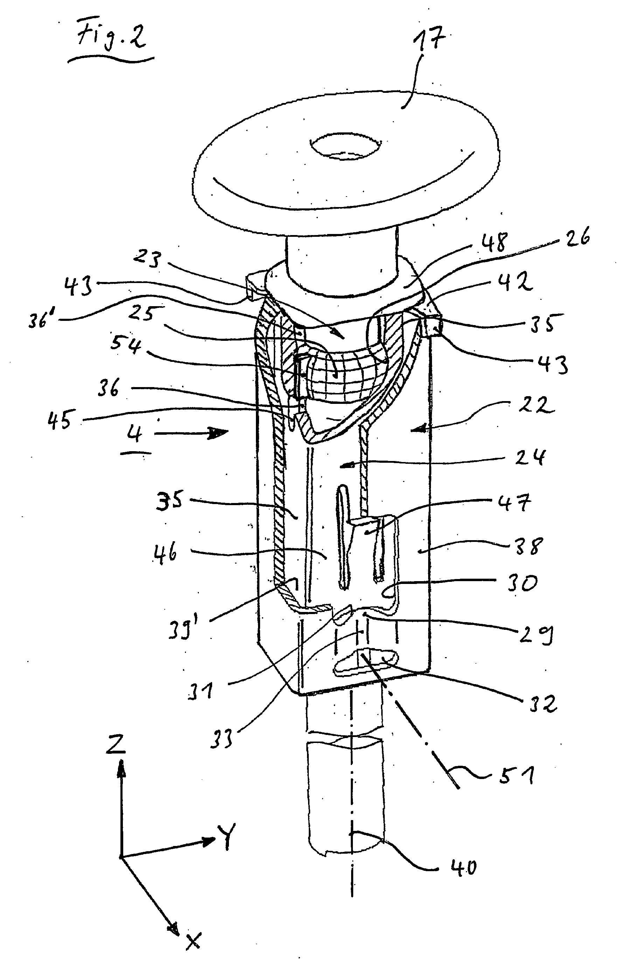

Der Träger 24 stützt sich mit seinem unteren Ende an zwei sich diametral in X-Richtung gegenüberliegenden Vorsprüngen 29 ab (Fig. 2). Die Vorsprünge 29 sind am unteren Ende der Lagerhülse 22 angeordnet und stehen nach innen vor. Sie werden jeweils von der Unterkante 31 eines Fensters 30 gebildet, das in der Wand des Trägers 24 eingebracht ist. Unterhalb des Vorsprungs 29 ist ein weiteres Fenster 32 vorhanden. Der zwischen den Fenstern 30, 32 vorhandene Steg 33 ist nach innen vorgewölbt. Die Oberkante des Steges 33 bzw. die Unterkante 31 des Fensters 30 weist eine konvex nach oben vorstehende Kontur auf. In die untere Stirnseite des Trägers 24 sind zwei sich in X-Richtung diametral gegenüberliegende Ausnehmungen 34 eingebracht, die an ihrem Grund eine bogenförmige, den Vorsprung 29 in Umfangsrichtung teilweise umfassende Kontur aufweisen. Durch die geschilderte Ausgestaltung ist der Träger 24 an der Lagerhülse 22 um eine in X-Richtung verlaufende dritte Achse 51 schwenkbar gelagert.

Um die Schwenkbarkeit der Führungshülse 23 innerhalb des Trägers 24 um die erste Achse 27 behinderungsfrei zu ermöglichen, ist zwischen den sich vom Ringvorsprung 25 nach oben und unten wegerstreckenden Längsabschnitten der Führungshülse 23 und den in y-Richtung weisenden Wänden 35 des Trägers 24 ein Spalt 36 bzw. 36' vorhanden, der sich - in der Y2-Ebene gesehen - mit zunehmender Entfernung vom Ringvorsprung 25 erweitert. In bezug auf den sich vom Ringvorsprung 25 nach unten weg erstreckenden Längsabschnitt wird dies dadurch erreicht, dass die Wände 35 zum unteren Ende des Trägers 24 hin divergieren, sie schließen einen sich nach unten öffnenden Winkel α ein, der den Schwenkbereich der Führungshülse 23 definiert. Der sich erweiternde Spalt 36' ist dadurch gebildet, dass sich die Innenwand des zugeordneten Trägerabschnitts der einen runden Innenquerschnitt aufweist, ausgehend vom Ringvorsprung 25 trichterförmig erweitert. An die schräg verlaufenden Längsabschnitte der Wände 35 schließen sich unterseits parallel zueinander verlaufende Wandabschnitte 37 an. Zwischen diesen Wandabschnitten 37 und den ihnen zugeordneten Bereichen der in Y-Richtung weisenden Wände 38 der Lagerhülse 22 ist ein geringer Spalt 39 vorhanden, um ein Verschwenken des Trägers 24 um die dritte Achse 51 zu ermöglichen. Zwischen den sich an die Wandabschnitte 37 anschließenden schrägen Längsabschnitten der Wände 35 und den Wänden 38 der Lagerhülse 22 ist ein Spalt 39' vorhanden, der sich aufgrund der Schrägstellung der Wände 35 nach oben hin stetig erweitert. Die Wände 38 schließen mit den Wänden 35 des Trägers 24 einen sich nach oben öffnenden spitzen Winkel β ein, der dem halben Schwenkbereich des Trägers 24 um die dritte Achse 51 entspricht.

Am oberen Ende des Trägers 24 ist ein sich quer zu dessen Mittellängsachse 40 erstreckender Flansch 42 angeformt. Der Flansch 42 hat eine der Lagerhülse 22 entsprechende Umrissform. Er ist so bemessen, dass er allseitig über die Lagerhülse 22 hinaus steht. Auf diese Weise ist verhindert, dass Fremdkörper in die Lagerhülse 22 eindringen und dort das Verschwenken des Trägers 24 behindern können.

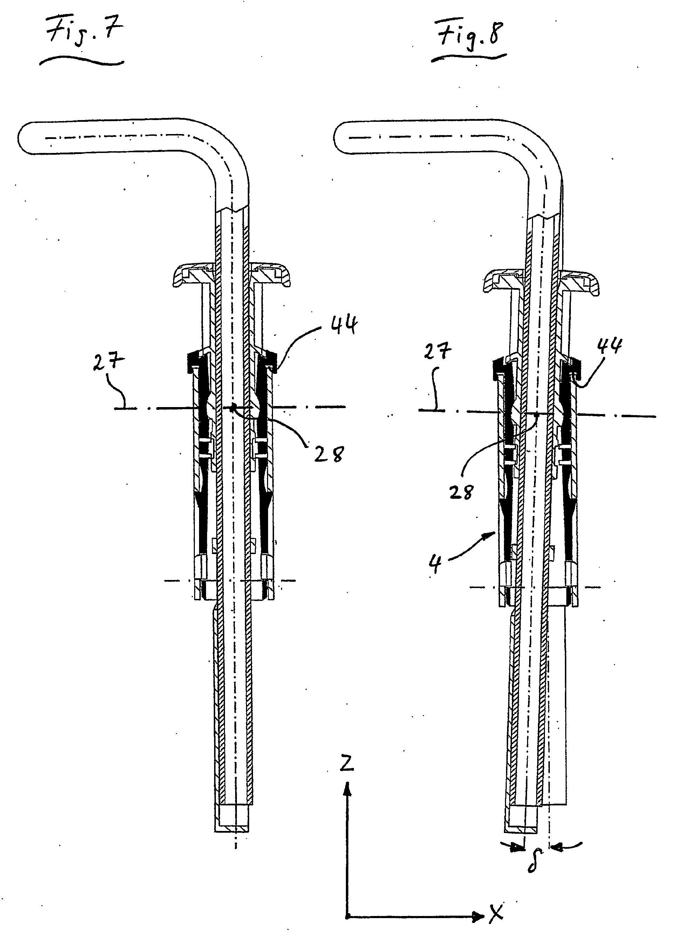

Sich in X-Richtung gegenüberliegende Ränder 43 des Flansches 42 sind in Z-Richtung nach unten gezogen und überlappen mit dem oberen Endbereich der Lagerhülse 22 (Fig. 2). Zwischen der Unterseite des Flansches 42 und der Stirnseite der Lagerhülse 22 ist ein Spalt 44 vorhanden (Fig. 7,8). Der Spalt 44 gewährleistet, dass der Träger 24 um die dritte Achse 51 geschwenkt werden kann, ohne das die Flanschunterseite mit der oberen Stirnseite der Lagerhülse 22 in Berührung kommt. Der obere Endbereich des Trägers 24 weist an den in Y-Richtung weisenden Wänden 38 jeweils einen in Bezug auf die Wandbreite mittigen Schlitz 45 auf. Dieser erstreckt sich von einem unterhalb der mit dem Ringvorsprung 25 zusammenwirkenden Ausnehmung 26 angeordneten Bereich in Axialrichtung und mündet in die obere Stirnseite des Trägers 24. Im Flansch 42 ist ebenfalls ein Schlitz 45' vorhanden, wodurch dieser in zwei Hälften unterteilt ist. Durch die Schlitze 45, 45' ist der gesamte obere Endbereich des Trägers 24 in zwei Hälften unterteilt. Bei der Montage wird die Führungshülse 23 in den Träger 24 eingesteckt. Da der sich oberseits an die Ausnehmung 26 anschließende Innenbereich der Führungshülse 23 einen kleineren Durchmesser aufweist als der Ringvorsprung 25, muss sich dieser Bereich aufweiten können, was durch die Schlitze 45, 45' gewährleistet ist. Die lichte Weite der Führungshülse 23 im Bereich der Ausnehmung 26 ist so gewählt, dass die Kugelfläche der Ausnehmung 26 mit Vorspannung an der Oberfläche des Ringvorsprunges 25 anliegt. Sobald der Träger 24 in der Lagerhülse 22 einliegt, ist die axiale Fixierung der Führungshülse 23 am Träger 24 unlösbar, da die Lagerhülse 22 eine Aufweitung des oberen Endbereichs des Trägers verhindert. Die axiale Fixierung des Trägers 24 an der Lagerhülse 22 erfolgt durch je eine an dem,in X-Richtung weisenden Wänden 46 vorhandene Rastnase 47. Die Rastnasen 47 hintergreifen den oberen Rand der Fenster 30.

Zur Entlastung des aus Ringvorsprung 25 und Ausnehmung 26 gebildeten Kugelgelenks beim Einschieben einer Tragstange 7 ist am Außenumfang der Führungshülse 23 ein Flansch 48 angeformt. Die auf der Unterseite des Flansches 48 vorhandene Fläche ist Teil einer Kugelfläche, die mit einer komplementär geformten Kuppe 49 auf der Oberseite des Flansches 42 zusammenwirkt. Die Kugelflächen der Kuppe 49 und der Unterseite des Flansches 48 bilden ein Kugelgelenk, dessen Mittelpunkt der Schnittpunkt der ersten und zweiten Achse 27, 28 ist. Der Flansch 48 dient auch als Anschlag zur Begrenzung der Einstecktiefe beim Zusammenbau von Führungshülse 23 und Träger 24.

Die beiden Halterungen 3, 4 sind am Sitzgestell 2 in einem Abstand 50 fixiert, der auf das Spurmaß des Kopfstützenbügels 5 abgestimmt ist. Ein Kopfstützenbügel 5 mit einem Soll-Spurmaß kann in die Halterungen 3, 4 eingesteckt werden, ohne dass Führungshülse 23 und Träger 24 ihre Position verändern. Bei der in Fig. 1 und 7 gezeigten Situation ist die Führungshülse 23 und der Träger 24 praktisch koaxial zur Mittellängsachse 52 der Lagerhülse 22 ausgerichtet.

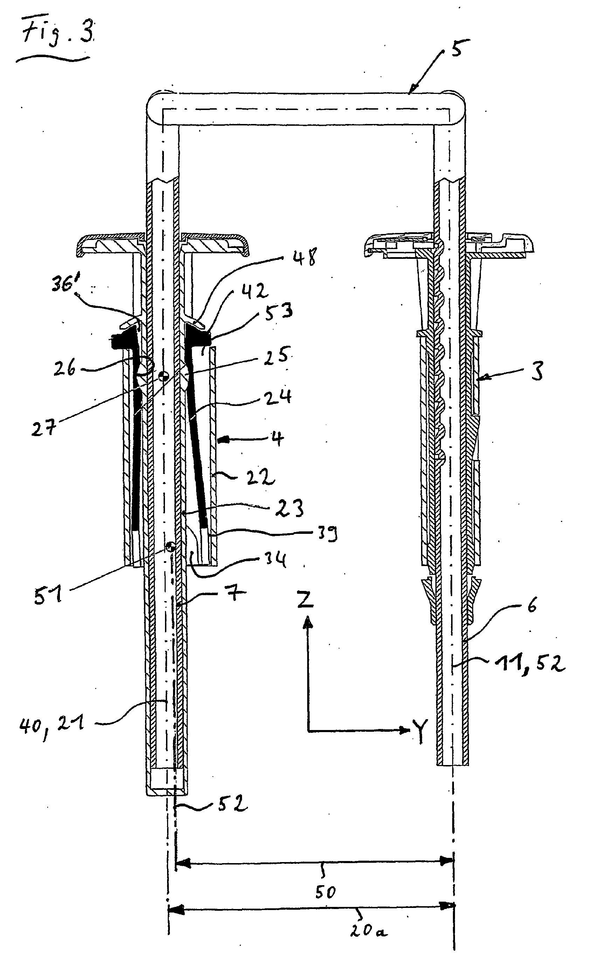

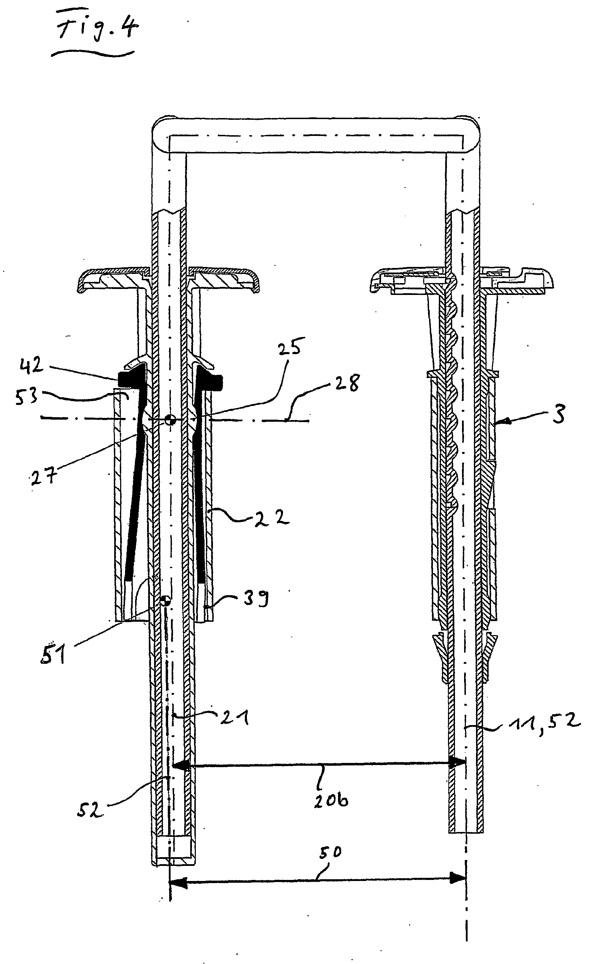

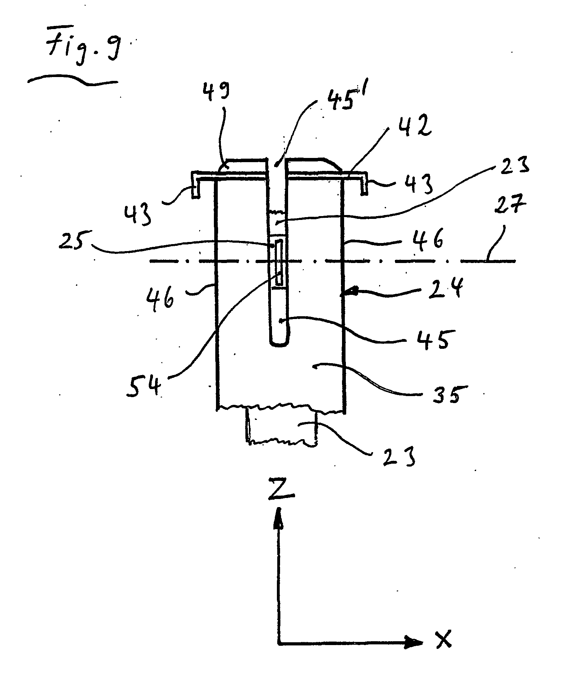

Bei der in Fig. 3 gezeigten Situation ist das Spurmaß des Kopfstützenbügels 5, also der Abstand 20a zwischen den Mittellängsachsen 11, 21 der Stangen 6, 7 größer als der Abstand 50 zwischen den Mittellängsachsen 52 der Lagerhülsen 10 und 22. Natürlich ist es genauso denkbar, dass der Abstand der Halterungen 3, 4 vom Sollmaß abweicht. Aus Gründen der Vereinfachung wird jedoch im folgenden von korrekt beabstandeten und parallel zueinander ausgerichteten Halterungen 3, 4 ausgegangen. Durch eine Schwenkbewegung des Trägers 24 um die dritte Achse 51 wird die Mittellängsachse der Führungshülse 23, die identisch ist mit der Mittellängsachse 21 der Tragstange 7, parallel in Y-Richtung in eine dem Abstand 20a entsprechenden Position verschoben. In Fig. 4 ist eine ähnliche Situation dargestellt, nur ist hier der Mittelachsenabstand 20b kleiner als der Mittelachsenabstand 50 zwischen den Lagerhülsen 10, 22. Eine Anpassung an das veränderte Spurmaß des Kopfstützenbügels 5 erfolgt wiederum durch eine Verschwenkung des Trägers 24 um die dritte Achse 51 in Y-Richtung, nur dieses mal in die entgegengesetzte Richtung wie bei dem Fall von Fig. 3. In beiden Fällen führen Träger 24 und Führungshülse 23 eine relative Schwenkbewegung um die erste Achse 27 aus. Zu bemerken ist noch, dass trotz der Verschwenkung des Trägers 24 in seine beiden Endlagen der Flansch 42 die obere Öffnung 53 der Lagerhülse 22 bedeckt hält. Der oberhalb des Vorsprungs 25 vorhandene Spalt 36' zwischen dem Träger 24 und der Führungshülse 23 sowie der Schlitz 45' (Fig.9) werden ebenfalls in jeder Schwenkposition durch den Flansch 48 abgedeckt. Ein Eindringen von Fremdkörpern in Schwenkbereiche von Führungshülse 23 und Träger 24 ist dadurch verhindert.

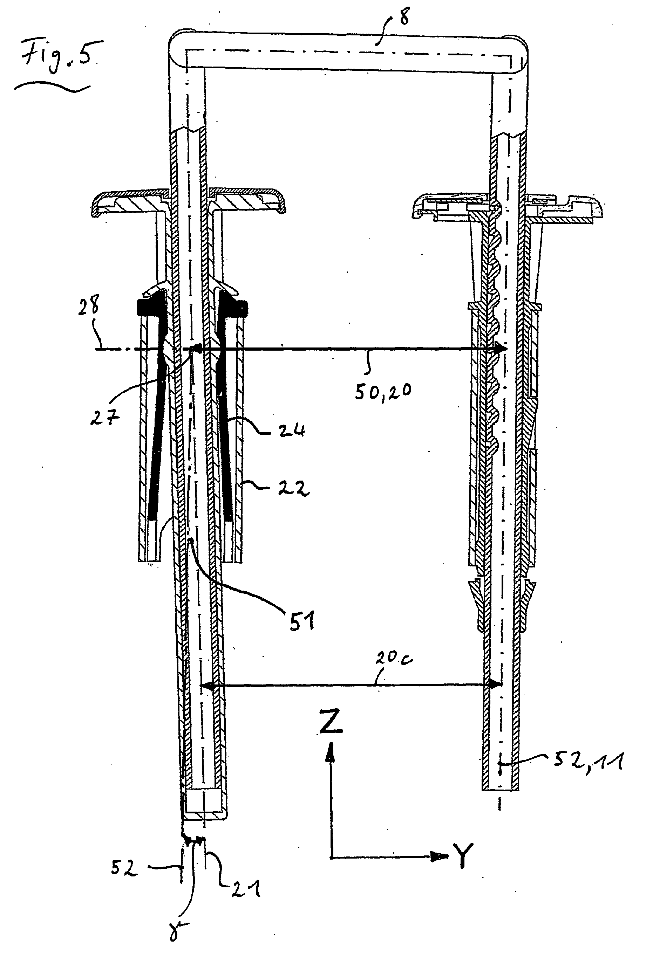

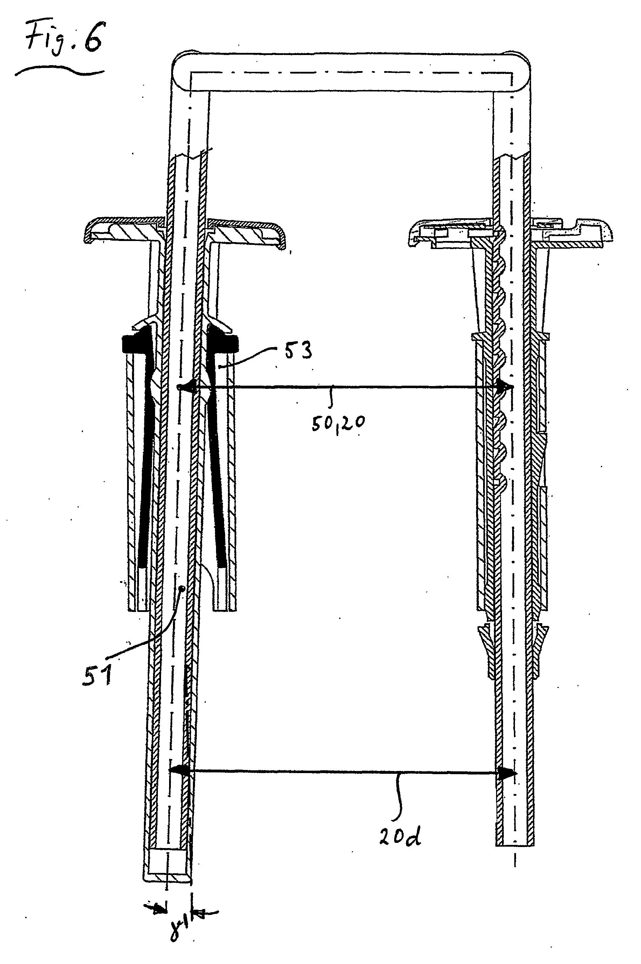

Bei dem Beispiel nach Fig. 5 verlaufen die Tragstangen 6, 7 in der YZ-Ebene nicht parallel sondern konvergieren zu ihren Freienden hin. Dementsprechend ist im Bereich der Freienden der Abstand 20c kleiner als der Sollabstand 20. Die Schrägstellung der Tragstange 7 wird durch eine entsprechende Verschwenkung der Führungshülse 23 um die erste Achse 27 kompensiert. Der Winkel γ der dabei vollzogenen Schwenkbewegung entspricht der Schrägstellung der Tragstange 7. Entsprechende Verhältnisse liegen natürlich auch vor, wenn nur die Tragstange 6 oder wenn beide Tragstangen 6, 7 von ihrer Sollausrichtung abweichen. In Fig. 6 ist eine ähnliche Situation gezeigt, nur divergieren hier die beiden Tragstangen 6, 7 zu ihren Freienden hin, so dass dort der Mittelachsen-Abstand 20d größer ist als der Sollabstand 20. Die Verschwenkung der Führungshülse 23 relativ zum Träger 24 erfolgt hier im Vergleich zu Fig. 5 in die Gegenrichtung um einen Winkel γ' welcher der Schrägstellung der Tragstange 7 entspricht.

Fig. 8 zeigt eine Situation, bei der die beiden Stangen in der XZ-Ebene verschränkt sind. Die Tragstange 7 ist um einen Winkel δ gegenüber der Stange 6 verkippt. Eine Kompensation dieser Schiefstellung erfolgt durch eine Schwenkbewegung der Führungshülse 23 um die zweite, sich in Y-Richtung erstreckende Achse 28. Eine Schwenkbarkeit des Trägers 24 bzw. eine Beweglichkeit in X-Richtung ist in diesem Falle nicht erforderlich, da eine beim Einschieben der Tragstange 7 in die Halterung 4 ergebende Bewegungskomponente in X-Richtung eine unwesentliche und daher nicht störende Verdrehung der Kopfstütze um die Tragstange 6 als Drehachse bewirkt. '

Die oben beschriebene Arbeitsweise einer Befestigungsvorrichtung ist unabhängig davon, ob sich die Führungshülse (23) um ihre Mittellängsachse 40 drehen kann oder nicht. Eine Drehfixierung ist aber dann sinnvoll, wenn ein am oberen Ende der Führungshülse angeordnetes Teil, beispielsweise eine ovale Abdeckplatte 17, eine vorgegebene Drehstellung gegenüber der Sitzlehne einnehmen soll. Zur Drehfixierung stehen von der Oberfläche des Ringvorsprungs 25 Anschläge radial hervor und erstrecken sich jeweils in eine Ausnehmung des Trägers 24 hinein. Dabei ist zwischen Anschlag und Ausnehmung ein Spiel in X-,Y- und Z-Richtung vorhanden um ein behinderungsfreies Verschwenken der Führungshülse 23 zu ermöglichen. Als Ausnehmung werden die ohnehin vorhandenen Schlitze 45 genutzt. Die Anschläge sind in Form von axial verlaufenden Rippen 54 ausgebildet (Fig. 9). Da die Schlitze 45 in Z-Richtung ausgerichtet und in der YZ-Ebene verlaufen, ist eine Schwenkung der Führungshülse 23 um die in X-Richtung verlaufende erste Achse 27 behinderungsfrei möglich. Die Rippen 54 und die Schlitze 45 sind weiterhin so bemessen, dass bei einer Schwenkung der Führungshülse 23 um die in Y-Richtung verlaufende zweite Achse 28 genügend Spiel vorhanden ist.

### Bezugszeichenliste

- 1: Fahrzeugsitz
- 2: Sitzgestell
- 3: Halterung
- 4: Halterung
- 5: Kopfstützenbügel
- 6: Stange
- 7: Stange
- 8: Teil
- 9: Führungshülse
- 10: Lagerhülse
- 11: Mittellängsachse (von 6)
- 12: Längsabschnitt
- 13: Rastnase
- 14: Fenster
- 15: Flansch
- 16: Lehnenoberseite
- 17: Abdeckplatte
- 18: Rastelement
- 19: Kerbe
- 20: Abstand
- 21: Mittellängsachse (von 7)
- 22: Lagerhülse
- 23: Führungshülse
- 24: Träger
- 25: Ringvorsprung
- 26: Ausnehmung
- 27: erste Achse
- 28: zweite Achse
- 29: Vorsprung
- 30: Fenster
- 31: Unterkante
- 32: Fenster
- 33: Steg
- 34: Ausnehmung (an 24)
- 35: Wand (von 24)
- 36: Abstand
- 36': Abstand
- 37: Wandabschnitt
- 38: Wand (von 22)
- 39: Spalt
- 39': Spalt
- 40: Mittellängsachse (von 23)
- 42: Flansch
- 43: Rand
- 44: Spalt
- 45: Schlitz
- 45': Schlitz
- 46: Wand (von 24 in x-Richtung weisend)
- 47: Rastnase
- 48: Flansch
- 49: Kuppe
- 50: Abstand
- 51: dritte Achse
- 52: Mittellängsachse (von 10 und 22)
- 53: Öffnung
- 54: Rippe

## Patentansprüche

1. Befestigungsvorrichtung für die Kopfstütze eines Fahrzeugsitzes mit zwei in Sitzquerrichtung (Y) beabstandeten Halterungen zur höhenverstellbaren Führung zweier die Kopfstütze tragenden Tragstangen (6, 7),
**gekennzeichnet durch**
- eine Halterung (4) mit einer ersten, eine Tragstange (7) im Sinne einer Gleitführung aufnehmenden Führungshülse (23), und
- einen am Sitzgestell (2) des Fahrzeugsitzes in Sitzquerrichtung (Y) beweglich geführten Träger (24), an dem die Führungshülse (23) um eine in Sitzlängsrichtung (X) verlaufende erste Achse (27) schwenkbar gelagert ist.

2. Befestigungsvorrichtung nach Anspruch 1,
**dadurch gekennzeichnet,**
**dass** die Führungshülse (23) um eine in Sitzquerrichtung (Y) verlaufende zweite Achse (28) schwenkbar gelagert ist.

3. Befestigungsvorrichtung nach Anspruch 1 oder 2,
**dadurch gekennzeichnet,**
**dass** der Träger (24)am Sitzgestell (2) um eine mit Abstand in Sitzhöhenrichtung (Z) zur ersten Achse (27) angeordnete und parallel zu dieser verlaufende dritte Achse (51)schwenkbar gelagert ist.

4. Befestigungsvorrichtung nach Anspruch 4,
**dadurch gekennzeichnet,**
**dass** die dritte Achse unterhalb der ersten Achse (27) angeordnet ist.

5. Befestigungsvorrichtung nach Anspruch 4,
**dadurch gekennzeichnet,**
**dass** ein sich oberhalb der dritten Achse (51) befindlicher Bereich des Trägers (24) am Sitzgestell in Sitzlängsrichtung (X) fixiert und in Sitzquerrichtung (Y) beweglich geführt ist.

6. Befestigungsvorrichtung nach Anspruch 4 oder 5,
**dadurch gekennzeichnet,**
**dass** die dritte Schwenkachse (51) von zwei am Sitzgestell (2) vorhandenen Vorsprüngen (29) gebildet ist, auf denen sich der Träger (24) abstützt.

7. Befestigungsvorrichtung nach einem der Ansprüche 1 bis 6,
**dadurch gekennzeichnet,**
**dass** die Führungshülse (23) mit einem von ihrer Außenseite vorstehenden Ringvorsprung (25) in eine komplementär ausgebildete Ausnehmung (26)am Träger (24)gelenkartig eingreift, wobei die Oberfläche des Ringvorsprungs (25) und die mit ihr zusammenwirkende Gegenfläche der Ausnehmung (26) Teile von Kugelflächen sind, deren Mittelpunkt der Schnittpunkt der ersten und der zweiten Schwenkachse (26, 27) ist.

8. Befestigungsvorrichtung nach einem der Ansprüche 1 bis 7,
**dadurch gekennzeichnet,**
**dass** sich die Führungshülse (23) mit einem von ihrer Außenseite vorstehenden Flansch (48) an einer Gegenfläche am oberen Ende des Trägers (24) abstützt.

9. Befestigungsvorrichtung nach Anspruch 8,
**dadurch gekennzeichnet,**
**dass** die miteinander zusammenwirkenden Flächen des Flansches (48) und des Trägers (24) Teile von Kugelflächen sind, deren Mittelpunkt der Schnittpunkt der ersten und der zweiten Drehachse (27, 28) ist.

10. Befestigungsvorrichtung nach einem der Ansprüche 1 bis 9,
**dadurch gekennzeichnet,**
**dass** der Träger ein von der Führungshülse (23) durchgriffenes Hohlprofil ist, das in einer am Sitzgestell (2) fixierten Lagerhülse (22) mit Spiel in Sitzquerrichtung (Y)einliegt.

11. Befestigungsvorrichtung nach Anspruch 10,
**dadurch gekennzeichnet,**
**dass** die in Sitzquerrichtung (Y) weisenden Wände des Trägers (24) zu ihrem unteren Ende hin divergieren.

12. Befestigungsvorrichtung nach einem der Ansprüche 1 bis 11,
**dadurch gekennzeichnet,**
**dass** die Führungshülse (23) in bezug auf ihre Mittellängsachse (40) drehfixiert ist.

13. Befestigungsvorrichtung nach Anspruch 12,
**gekennzeichnet durch**,
zwei am Vorsprung 25 an diametral gegenüberliegenden Stellen angeformte, radial abstehende Anschläge, die in zwei Ausnehmungen am Träger mit Spiel in X-, Y- und Z-Richtung eingreifen.

14. Befestigungsvorrichtung nach einem der Ansprüche 1 bis 13,
**dadurch gekennzeichnet,**
**dass** eine Ausnehmung durch einen Schlitz (45) in der in Y-Richtung weisenden Wand (46) des Trägers (24) gebildet ist, der sich von einem unterhalb der mit dem Vorsprung (25) zusammenwirkenden Ausnehmung (26) angeordneten Bereich des Trägers (24) nach oben erstreckt und in der oberen Stirnseite des Trägers (24) mündet.

## Claims

1. Fastening device for the headrest of a vehicle seat with two holders spaced apart in the transverse direction (Y) of the seat for the height-adjustable guidance of two support rods (6, 7) which support the headrest, **characterized by**
- a holder (4) with a first guide sleeve (23), which accommodates a support rod (7) in the manner of a sliding guide, and
- a carrier (24), which is guided on the seat frame (2) of the vehicle seat in such a way that it can be moved in the transverse direction (Y) of the seat and on which the guide sleeve (23) is mounted in such a way that it can be pivoted about a first axis (27), which extends in the longitudinal direction (X) of the seat.

2. Fastening device according to Claim 1, **characterized in that** the guide sleeve (23) is mounted in such a way that it can be pivoted about a second axis (28), which extends in the transverse direction (Y) of the seat.

3. Fastening device according to Claim 1 or 2, **characterized in that** the carrier (24) is mounted on the seat frame (2) in such a way that it can be pivoted about a third axis (51), which is arranged at a distance in the vertical direction (Z) of the seat from the first axis (27) and extends parallel thereto.

4. Fastening device according to Claim 3, **characterized in that** the third axis is arranged underneath the first axis (27).

5. Fastening device according to Claim 4, **characterized in that** a region of the carrier (24) which is situated above the third axis (51) is fixed on the seat frame in the longitudinal direction (X) of the seat and is guided in such a way that it can be moved in the transverse direction (Y) of the seat.

6. Fastening device according to Claim 4 or 5, **characterized in that** the third pivoting axis (51) is formed by two projections (29) on the seat frame (2), upon which projections the carrier (24) is supported.

7. Fastening device according to one of Claims 1 to 6, **characterized in that** the guide sleeve (23) engages in an articulated manner, by means of an annular projection (25) protruding from its outside, in a complementarily shaped recess (26) in the carrier (24), the surface of the annular projection (25) and the mating surface of the recess (26) which interacts with it being portions of spherical surfaces, the centre of which is the point of intersection of the first and the second pivoting axis (26, 27).

8. Fastening device according to one of Claims 1 to 7, **characterized in that** the guide sleeve (23) is supported, by means of a flange (48) projecting from its outside, on a mating surface on the upper end of the carrier (24).

9. Fastening device according to Claim 8, **characterized in that** the interacting surfaces of the flange (48) and the carrier (24) are portions of spherical surfaces, the centre of which is the point of intersection of the first and the second axis of rotation (27, 28).

10. Fastening device according to one of Claims 1 to 9, **characterized in that** the carrier is a hollow profile, through which the guide sleeve (23) passes and which rests with play in the transverse direction (Y) of the seat within a mounting sleeve (22) fixed on the seat frame (2).

11. Fastening device according to Claim 10, **characterized in that** the walls of the carrier (24), which face in the transverse direction (Y) of the seat, diverge towards their lower end.

12. Fastening device according to one of Claims 1 to 11, **characterized in that** the guide sleeve (23) is fixed in terms of rotation relative to its longitudinal centre axis (40).

13. Fastening device according to Claim 12, **characterized by** two radially extending stops, which are formed integrally at diametrically opposite points on the projection (25) and engage in two recesses in the carrier with play in the X, Y, and Z directions.

14. Fastening device according to one of Claims 1 to 13, **characterized in that** a recess is formed by a slot (45) **in that** wall (46) of the carrier (24) which faces in the Y direction, which slot extends upwards from a region of the carrier (24) arranged below the recess (26) interacting with the projection (25) and opens into the upper end face of the carrier (24).

## Revendications

1. Dispositif de fixation de l'appui-tête d'un siège de véhicule, comprenant deux fixations à distance dans la direction (Y) transversale du siège, pour le guidage réglable en hauteur de deux barres (6, 7) porteuses portant l'appui-tête,
**caractérisé par**
- une fixation (4) ayant un premier manchon (23) de guidage recevant une tige (7) porteuse en vue d'un guidage à glissement, et
- un support (24), qui est guidé de manière mobile dans la direction (Y) transversale du siège sur la carcasse (2) du siège du véhicule et sur lequel le manchon (23) de guidage est monté pivotant autour d'un premier axe (27) s'étendant dans la direction (X) longitudinale du siège.

2. Dispositif de fixation suivant la revendication 1,
**caractérisé**
**en ce que** le manchon (23) de guidage est monté pivotant autour d'un deuxième axe (28) s'étendant dans la direction (Y) transversale du siège.

3. Dispositif de fixation suivant la revendication 1 ou 2,
**caractérisé**
**en ce que** le support (24) est monté pivotant sur la carcasse (2) du siège autour d'un troisième axe (51) disposé à distance du premier axe (27) dans la direction (Z) en hauteur du siège et s'étendant parallèlement à celui-ci.

4. Dispositif de fixation suivant la revendication 3,
**caractérisé**
**en ce que** le troisième axe est en dessous du premier axe (27).

5. Dispositif de fixation suivant la revendication 4,
**caractérisé**
**en ce qu'**une partie du support (24) se trouvant au-dessus du troisième axe (31) est immobilisée sur la carcasse du siège dans la direction (X) longitudinale du siège et guidée de manière mobile dans la direction (Y) transversale du siège.

6. Dispositif de fixation suivant la revendication 4 ou 5,
**caractérisé**
**en ce que** le troisième axe (31) de pivotement est formé par deux saillies (29) présentes sur la carcasse (2) du siège sur lesquelles s'appuie le support (24).

7. Dispositif de fixation suivant l'une des revendications 1 à 6,
**caractérisé**
**en ce que** le manchon (23) de guidage s'articule dans un évidement (26) complémentaire du support (24) à une saillie (25) annulaire dépassant de sa face extérieure et les surfaces antagonistes de l'évidement (26) coopérant avec la saillie annulaire font partie de surfaces de billes, dont le centre est le point d'intersection du premier et du deuxième axes (26, 27) de pivotement.

8. Dispositif de fixation suivant l'une des revendications 1 à 7,
**caractérisé**
**en ce que** le manchon (23) de guidage s'appuie par une bride (48) dépassant de sa face extérieure sur une surface antagoniste à l'extrémité supérieure du support (24).

9. Dispositif de fixation suivant la revendication 8,
**caractérisé**
**en ce que** les surfaces qui coopèrent entre elles de la bride (28) et du support (24) font partie de surfaces de billes, dont le centre est le point d'intersection des premier et deuxième axes (27, 28) de pivotement.

10. Dispositif de fixation suivant l'une des revendications 1 à 9,
**caractérisé**
**en ce que** le support est un profilé creux, dans lequel pénètre le manchon (23) de guidage et qui est inséré avec jeu dans la direction transversale du siège dans un manchon (22) formant palier immobilisé sur la carcasse (2) du siège.

11. Dispositif de fixation suivant la revendication 10,
**caractérisé**
**en ce que** les parois du support (24), tournées dans la direction (Y) transversale du siège, divergent vers leur extrémité inférieure.

12. Dispositif de fixation suivant l'une des revendications 1 à 11,
**caractérisé**
**en ce que** le manchon (23) de guidage est immobilisé en rotation par rapport à son axe (40) longitudinal médian.

13. Dispositif de fixation suivant la revendication 12,
**caractérisé**
**par** deux butées qui dépassent radialement qui sont formées en des points opposés diamétralement sur la saillie (25) et qui pénètrent avec jeu dans la direction X, Y et Z dans deux évidements du support.

14. Dispositif de fixation suivant l'une des revendications 1 à 13,
**caractérisé**
**en ce qu'**un évidement est formé par une fente (45) dans la paroi (46) du support (24), tournée dans la direction Y, fente qui s'étend d'une partie du support (24) disposée en dessous de l'évidement (26) coopérant avec la saillie (25) vers le haut et qui débouche dans la face frontale supérieure du support (24).
